# EUROPEAN PATENT SPECIFICATION

(11) **EP 1 245 114 B1**
(45) Date of publication and mention of the grant of the patent: **10.12.2008**
(21) Application number: 00968170.1
(22) Date of filing: 24.10.2000
(51) Int. Cl.: H04N 7/18

(54) **METHOD AND SYSTEM FOR VIDEO MONITORING**
VIDEOÜBERWACHUNGSSYSTEM- UND METHODE
PROCEDE ET SYSTEME DE SURVEILLANCE PAR VIDEO

(30) Priority: 29.10.1999 US 430309
(43) Date of publication of application: 02.10.2002
(60) Divisional application: 04077331.9
(73) Proprietor: Nokia Corporation, 02150 Espoo (FI)
(72) Inventor: TANSKANEN, Erkki, FIN-01660 Vantaa (FI)
(74) Representative: Ruuskanen, Juha-Pekka
(86) International application number: PCT/IB2000/001526
(87) International publication number: WO 2001/031925

(56) References cited:
- WO-A-97/41686
- JP-A- 11 224 383
- US-A- 5 793 419

## Description

### TECHNICAL FIELD

This invention relates generally to methods and systems for providing remote video communications. A particular aspect of the present invention relates to a method and system for monitoring a site using a camera located at the site.

In general, remote video systems provide visual communication between a central location and a person at a different location. An exemplary application of such remote video systems is a security system for protecting the location using a video camera which provides still or video image signals of the premises. Because of the bandwidth generally required for transmitting video signals, substantial network connection charges may be incurred if the video signal is continuously transmitted. Therefore, a network connection and transmission of video image signals is not carried out before it is necessary. A number of different detectors are utilized in the monitored site for providing information about various conditions at the site. If the information received from the monitored site is such that further efforts may be needed, an alarm signal is sent to a security guard or central alarm station. Upon receipt of the alarm signal, a direct connection may be initiated and a still or video image signal of the monitored site then transmitted to the central alarm station or to a person at a remote location.

Such a conventional video monitoring method and system has at least the following drawbacks. If the video picture is sent to a security guard at a stationary remote location, the viewed on-line video is usually not the most interesting picture or does not show the reason for the alarm. Instead, it is a picture transmitted soon after the alarm was sent. Therefore, the transmitted picture might not show what happened when the alarm was initiated. This is especially problematic if the security guard is in a motor vehicle vehicle on the road or otherwise without a direct connection to the monitored site, since there might be some significant delays in forwarding the video signal to the guard using conventional wireless networks.

The international patent application WO 97 41686 A1 discloses a prior art security system. A mobile platform, such as a school bus, is monitored by a number of cameras. Images are stored at the mobile platform and are also transmitted, as a reaction to an alarm signal generated at the mobile platform, to a remote location where the images are viewed and where a user can react to an incident at the monitored location.

Japanese patent application, published with number 11 224 383, illustrates a portable burglar prevention device. A portable telephone is used as a remote display screen for a monitoring camera. Images are sent from the camera to the telephone and a user of the telephone can confirm the conditions of the scene by looking at the display of the telephone and elect to call the police.

US patent number 5 793 419 illustrates a personal audio/video surveillance system. A video camera and a microphone in a single packet is worn by a person. Images and sound are transmitted from the video/audio-packet to a central location where recorded.

Consequently, the conventional methods and systems have a problem of how to send the picture so that a guard or other person can see what happened just when the alarm was generated. There is also a problem of how to send a satisfactory picture to a mobile terminal without incurring undesireable delays, errors, dropped frames, etc.

### DISCLOSURE OF THE INVENTION

The present invention thus addresses video monitoring systems which are disadvantageous for at least the reasons recognized above. In particular, the present invention is directed to a method and system for video monitoring in which a person at a remote location is put into communication with a monitored site. The present invention also allows those persons at remote locations to engage in control of the video signal and other services when they are connected. For example, a security guard on the road can control the video signal using rewind and forward functions so that it shows the reason for the connection. A video segment can be selected which includes the video at the time of the connection and a small part of video before the connection.

An exemplary embodiment of the present invention is directed a system and method of monitoring a site from a remote location transmits a video picture generated at the site to the remote location. A video signal is generated from a video camera located at the site. A wireless connection is established between the site and a display device at the remote location in response to a request signal and video is transferred over the connection. In response to control signals received from the display device, a portion of the video signal is transferred to the display device. The portion includes the video generated at the time of the request signal and prior to the request signal.

### BRIEF DESCRIPTION OF THE DRAWINGS

Fig. 1 is a generalized block diagram illustrating the major elements of a video monitoring system according to an exemplary embodiment of the invention.
Fig- 2 is an illustration of a display device used in the exemplary embodiment shown in Fig. 1.
Fig. 3 is a flowchart illustrating a method of providing a video signal according to an exemplary embodiment of the invention.

### BEST MODE FOR CARRYING OUT THE INVENTION

The foregoing and a better understanding of the present invention will become apparent from the following detailed description of example embodiments and the claims when read in connection with the accompanying drawings, all forming a part of the disclosure of the invention. While the foregoing and following written and illustrated disclosure focuses on disclosing example embodiments of the invention, it should be clearly understood that the same is by way of illustration and example only and is not to be taken by way of limitation, the scope of the present invention being limited only by the terms of the claims in the patent issuing from this application.

An exemplary embodiment of the present invention seeks to provide a method of video monitoring a central location in which some degree of control over the video monitoring can be performed by a person at a remote location. One possible application of the exemplary embodiment of the invention is a security system in which the video signal from a surveillance camera at a physical site may be connected with a person at a remote location upon an alarm signal and the video can be controlled by the person at the remote location in order to concentrate attention on a time period of the video signal. The invention of course is not limited to such exemplary embodiment.

### Alarm Site Monitoring System

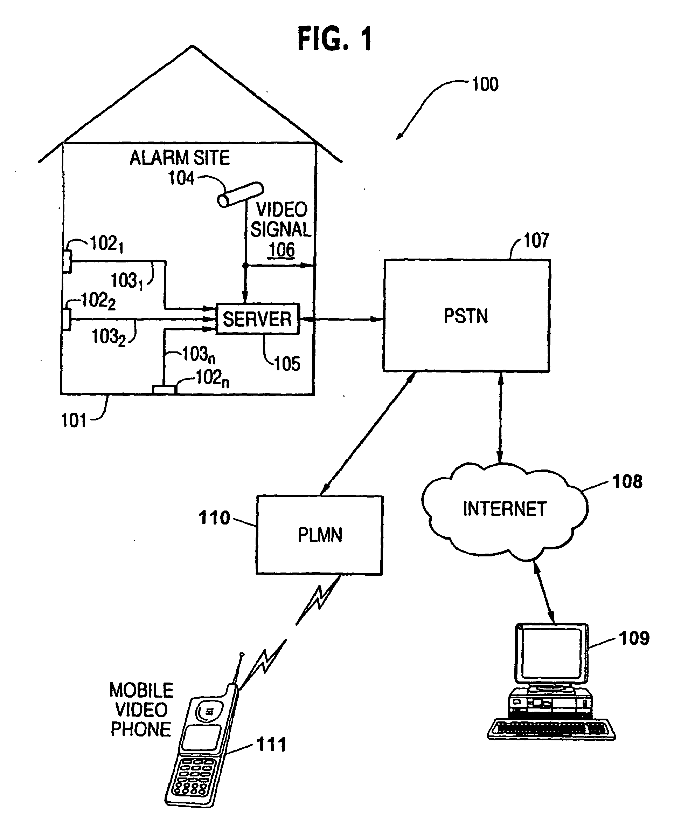

As shown in Fig. 1, a video monitoring system 100 has an alarm site 101 in which there are one or more different detectors 102₁ - 102ₙ as known in the art for providing respective alarm signals 103, - 103n. A video camera 104 provides a video signal showing the site. There may also be additional individual video cameras (not shown) for providing respective video signals of different portions of alarm site 101 or from a different viewing perspective. The video camera 104 may be of any suitable type, including a surveillance camera. The video signal can be forwarded to a recording device 105, forwarded to an external feed 106, or split and forwarded to both. In the exemplary embodiment, a video server is provided at the alarm site to both store the video signal and transmit it to remote locations. The video signal may be of a standardized broadcast video format such as NTSC or PAL, or it may be of another video format presently existing or hereinafter developed for surveillance or other relatively low bandwidth signals. As used in this application, the term video signal includes signals having only pictorial information as well as signals having both pictorial information and audio corresponding in time with the pictorial information.

There may or may not be a real-time compression unit or encoder integrated as part of the video camera. In either case, the compressed data stream can be immediately packetized and transferred to switching system 107. However, the compressed data is preferably recorded and stored locally (in the alarm site) for later transfer to switching system 107. In the case of a video signal with associated audio, the audio information is interleaved with the pictorial information into a single bitstream.

In an alternative embodiment of the invention, the video camera 104 may be a digital video camera used in conjunction with a personal computer or another camera conventionally used in conjunction with a computer terminal, such as, for example, an automated teller machine (ATM). The camera can be attached to, located nearby or enclosed within the personal computer or computer terminal. The video signal generated by such a camera may be in a format more easilyprocessed by a personal computer, such as MPEG-2, MPEG-3 or MPEG-4, rather than in a NTSC, PAL or surveillance camera format.

### Video Compression

In the exemplary embodiment, it is expected that the video signal provided by camera 104 will have to be compressed internally or externally since many of the transmission channels are narrowband channels with low hit rates. For example, internet connections are usually limited to about 56 kilobits per second. Therefore, a high degree of compression is necessary for the video to be transmitted over those channels. The video of the resulting compressed data stream will have a resolution of about 176 x 144 pixels and a frame rate of up to 15 Hz. Although the compression process is somewhat computationally intensive, the decompression process at the receiving end of the transmission is much less intensive and amenable to devices, such as mobile stations, with relatively low computational power.

If camera 104 is not configured to provide a low bit rate video signal, a separate video compression unit located at the alarm site, such as an ITU-T H.261, H.263 or MPEG 4 encoder, compresses the video signal from video camera 104. According to these compression techniques, each frame of the video signal will have a time stamp associated with it. Other low bandwidth compression systems may also be used. See, for example, "Solution for low bit-rate video coding" by M. Karcewicz et al, Advance, Vol. 8, September 1997. Since many applications of the invention in a security environment will emphasize surveillance, the compression process may utilize a motion-sensitive variable compression algorithm providing a high degree of compression in the absence of movement in the picture and a low degree of compression in the presence of movement.

### Video Server

A variety of arrangements can be made for recording the video at the alarm site. In the exemplary embodiment, recording device 105 is a video server which stores the video signal from camera 104 in a large capacity video database and then provides the video for later transmission upon demand. It is also configured to receive the various alarm signals from the detectors at the alarm site. When the video signal is transferred by the server as described below in response to an alarm, data indicating the time of the alarm and the correspondence between frames of the video signal and the time of said alarm is included in the video signal.

The server is preferably a dedicated video server capable of transmission over HTTP, TCP and UDP protocols. In the case of UDP, the server packetizes the video signal from the camera in order to enable recovery from packet losses during wireless transmission. The server can preferably adjust the video signal (by changing the resolution and/or frame rate) to best suit the available network bandwidth and avoid congestion and loss of video in any particular connection. In particular, as explained below the server supports a variety of controls over the part of the video signal transmitted utiling fast-forward and fast-rewind operations. The server may support real-time video streaming of the video as well as this store and forward serving of video. Preferably, the server utilizes a buffer for temporarily storing the most recent portion of the video signal received from camera 104. In response to an alarm signal, the buffered video signal can be transmitted more quickly than a video signal stored in the large capacity video database. Rather than a dedicated video server a web server can be used to transmit video over HTTP. Although less expensive, such a server is disfavored since flow control such as fast-forward and rewind can typically only be accomplished with advanced and complicated programming.

### Transmission of Video Signal

The video signal from video camera 104 at alarm site 101 is provided to switching system 107 of a network (other elements of the network are not shown for the sake of simplicity) such as the public service telephone network (PSTN). Alternatively, the switching system can have some intelligence and functionality built into it for performing the functions of the video unit. The video signal can be bi-directionally transferred between switching system 107 and public land mobile network (PLMN) 110. A wireless link can be established between PLMN 110 and a mobile station 111 to forward the video signal to the mobile station 111. The video signal can also be forwarded, for example, from switching system 107 to a stationary computer, including monitor, 109 via the internet 108. While certain devices are used in the exemplary embodiment, any suitable device, either presently existing or hereafter developed, may be utilized to receive and display the video. As discussed herein, the client can be a standalone, dedicated, device or can have the functionality embedded within other communications technology such as a web browser.

In the exemplary embodiment using a server at the monitored site, the stationary computer or mobile station can interact with the server using client-server connections. In a PSTN network, the connections are conventional point-to-point switched connections. The video is transferred from the server in the monitored site to the client through the network. In the reverse direction, the client (computer mobile station, or other suitable device) can control some operations of the server using control protocols. The client can, for example, control some parameters of the connection, such as bit rate, degree of error correction, etc.

In particular, in the exemplary embodiment, the server is configured to allow each respective client to designate parameters of the connection in order to optimize the communication link to compensate for the communication medium. For example, the exemplary embodiment of Fig. 1 shows an internet connection to a computer and wireless connection to a mobile station. Signals can be sent from the computer to the switching system, either directly as shown in the exemplary embodiment of Fig. 1, or through internet 108. Each of these communication links have significantly different characteristics and the video transmission is controlled accordingly.

### Internet Video Transmission

The internet uses transmission control protocol (TCP) transport layer in which packets dropped during transmission are retransmitted. Thus a client receiving the video signal via the internet must deal with the fact that the channel throughput may be highly variable due to TCP packet retransmission. The video can either be entirely downloaded first and then displayed, displayed after some buffering is done to control the transmission rate, or streamed despite errors, dropped frames or pauses in the video.

UDP introduces relatively stable throughput, but also the possibility of packet losses. Consequently, the client must be able to recover from packet losses and possibly conceal the lost video content. Despite the concealment, the quality of the reconstructed video suffers somewhat. On the other hand, the playback of the clip is likely to happen in real-time without annoying pauses. Also, a computer of a security agency may utilize a firewall which do not permit UDP, in which case, adjustments have to be made for UDP.

As specific examples of internet video systems, RealSystem G2™ from RealNetworks and NetShow 3.0 or 4.0 from Microsoft may be used. RealSystem uses the Real Time Streaming Protocol (RTSP) and data, such as time of the alarm, location, etc., can be sent along with the video information. This data can be displayed along with the video.

The client terminal may consist of a personal computer (PC). It should be capable of communicating with the server through the internet and over a network such as, for example, the public service telephone network (PSTN).

### Wireless Video Transmission

Communication links in wireless cellular networks can experience high amounts of error, loss of signal strength, etc., not found in wired networks. In addition to historically low bit rates for data communication, these disadvantages have conventionally rendered video transmission in a wireless cellular network a practical impossibility. However, newly developed networks such as the Global System for Mobile Communications (GSM) phase 2+ in Europe and the Universal Mobile Telecommunication System (UMTS) have increased the data rates to such an extent that the quality of video signals can be made acceptable. Video transmission can be carried out using, for example, HighSpeed Circuit Switched Data (HSCSD) and General Packet Radio Services (GPRS).

HSCSD offers two basic connection types, namely transparent and non-transparent, distinguished by their way of correcting transmission errors. In a transparent connection, error corection is done entirely by a forward error correction mechanism. Consequently, the available throughput is constant and the transmission delay is fixed, but the transmitted data are likely tocontain bit inversion errors. In the non-transparent approach, the Radio Link Protocol (RLP) is used to provide retransmission in case of detected errors in the receiving end. Consequently, a non-transparent connection is error free, but through put and transmission delay is varying.

UDP over transparent HSCSD introduces bit errors in addition to possible packet losses. However, UDP can detect and indicate these bit errors. The erroneous packets can then be discarded in the receiving end. However, the decoders might utilize the erroneous data in concealment and it might be worthwhile to try to decode the erroneous packets, too. UDP over non-transparent HSCSD is free of bit errors but introduces varying delay due to retransmission. Thus, this approach is likely to perform worse than UDP over transparent HSCSD.

In the TCP over transparent HSCSD approach, the unit to retransmit is a TCP packer, whereas in the TCP over non-transparent HSCSD approach, the unit to retransmit is a GSM frame. Since a GSM frame contains fewer bits than a TCP packet, the retransmission of a TCP packet is likely to cause retransmission of already correctly transmitted data therefore reducing the channel throughput. Thus, the exemplary embodiment uses TCP over non-transparent HSCSD.

GPRS is a packet switched data service. It provides multiple Quality of Service (QoS) levels with varying service reliability and more optimal network usage than in HSCSD. This enables flexible support for connections of different parameters. For example, the video signal could be transmitted with various degrees of error protection and delay.

The mobile stations in the wireless network can be phone units configured to receive and display video signals as well as voice. These video display capabilities may support any suitable wireless video transmission standard or proprietary system or may include a web browser, such as Netscape Navigator or Microsoft Internet Explorer, supporting a standardized or proprietary Internet streaming technology. They may also be laptop computers or communicator-like terminals with internet access, in which case the above-mentioned internet transmission methods can be used over the wireless network. Such a device preferably is able to carry out all of the video server control functions of a client discussed below as well as the communication protocols to set-up connection. In particular, a remote access system is included so that the mobile phone or other terminal equipment can be remotely accessed by control signals included in the digital service information to, for example, turn the equipment on and off or at least contact the equipment while it is operating is a suspended mode of operation.

### Video Client

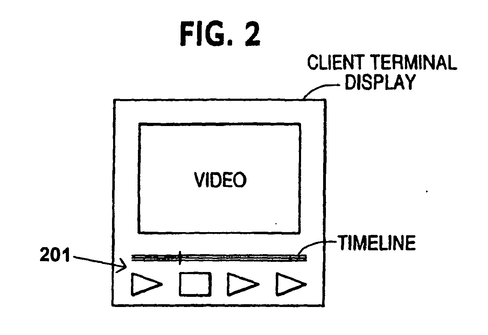

Fig. 2 shows an example of a graphical user interface for the display with some functions of a client device receiving the video signal. The display can be a fixed station (e.g., a desktop computer) or part of a mobile station.

The client also has content controls 201 which permit the client to select a clip of video to be displayed. In particular, the controls 201 permit the client to control the display of video by selecting functions of PLAY, STOP, REWIND, FORWARD, FAST FORWARD and FAST REWIND in much the same manner as a video cassette recorder. In addition, the client can control the video information by reference to a time line or time stamp information associated with the video. The controls 201 may also allow the client to designate a time lapse loop. Of course, the client is configured to decompress and demultiplex the video signal into its audio, video and time stamp components and display the video and play the audio continually as the video signal is being received.

### Monitoring Method

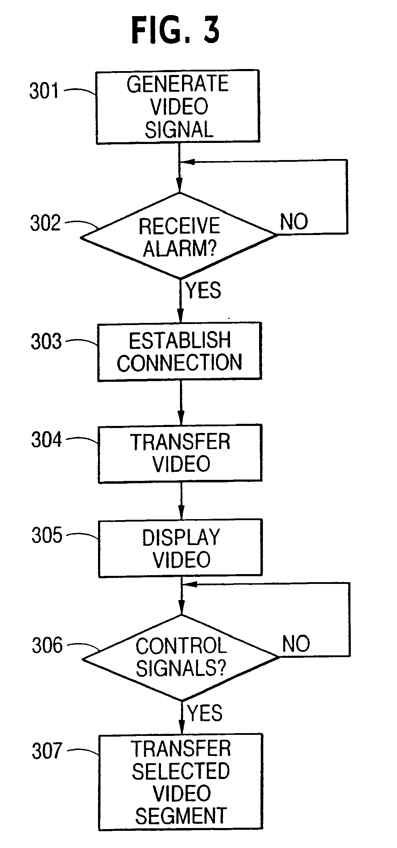

The monitoring method according to an example embodiment of the invention is illustrated by the flowchart in Fig. 3. In the exemplary embodiment of the invention, a site or premises to be monitored has a camera which generates a video signal of the site (step 301). The site has one or more detectors for providing an alarm signal(s). The alarm signal(s) is transferred to a central alarm station at the switching station 107 where the alarm signals from a plurality of monitored sites are collected. Upon receipt of an alarm (step 302), a connection is set up with the alarm site (step 303). The video picture is transferred as soon as possible to the switching station (step 304). In order to expedite transfer of the picture signal, a short length of video is buffered at the same time it is recorded.

The video from the alarm site can be displayed on a terminal using the internet or an intranet, ISDN, PSTN or wireless network communication lines directly for a point-to-point connection (step 305). The video signal preferably includes a time stamp indication of the time of an alarm for review simultaneously with the video signal. Control signals and commands are transferred from the computer to the switching station which instruct the switching station to transmit the appropriate video data just at the alarm time to determine why the alarm occurred (step 306). This is preferably accomplished by the user clicking on part of the user interface to transmit a command or instruction to the switching station which causes the switching station to in turn respond by transferring the video data according to the user selection (step 307). For example, if the user pushes the button for rewind, a command is sent to the switching station which represents the user selection of a rewind function and then the video data is virtually rewound. In this way, the person can review the video not only at the time that he calls in, but also at the moment of the alarm.

While the foregoing has described what are considered to be example embodiments of the invention, it is understood that various modifications may be made therein and that the invention may be implemented in various forms and embodiments, and that it may be applied in numerous applications, only some of which have been described herein. It is intended by the following claims to claim all such modifications and variations.

## Claims

1. A method of monitoring a site (101) from a remote location, comprising:
generating (301) by a video camera (104) a video signal of the site (101);
storing (301) the video signal in a video server (105) at the site (101) ;
in response (302) to an alarm signal, said alarm signal generated upon detection of an event at the site (101), establishing (303) a wireless connection for transfer of video signal between the site (101) and a display device (111) located at the remote location and, while continuing storing the video signal, also transferring (304) the video signal from the site (101) to the display device (111) at the remote location over said wireless connection;
controlling transfer of further video signal from the site (101) to the display device (111) by sending control signals from the display device to the video server (105); and
in response (306) to the control signals received from the display device (111), transferring (307) a portion of the stored video signal to the display device (111) at the remote location, where said portion of stored video signal having been generated during a time period at least partly covering time prior to said alarm signal.

2. The method recited in claim 1, wherein the control signals correspond to the selection of functions on the display device (111) and are generated in response to user inputs entered at the display device (111).

3. The method recited in claim 2, wherein the functions comprise one or more of the functions of STOP, PLAY, FORWARD and REWIND.

4. The method recited in claim 1, wherein the display device (111) displays a time line corresponding to said portion of the video signal.

5. The method recited in claim 4, wherein the display device (111) comprises controls (201) to select the start time of video to be displayed on the display device (111).

6. The method recited in any one of claims 1 to 5, wherein the alarm signal is generated upon an alarm produced by one of a plurality of different detectors (102) at the site (101).

7. The method according to any one of claims 1 to 6, comprising:
including in said video signal, data indicating the time of said alarm signal and the correspondence between frames of the video signal and the time of said alarm signal.

8. The method according to any one of claims 1 to 7, comprising compressing said video signal at a separate video compression unit located at the alarm site using an encoder selected from a group comprising H.261 encoder, H.263 encoder and MPEG 4 encoder.

9. The method according to any one of claims 1 to 8, wherein said wireless connection is established between the site (101) and a mobile station (111) configured to receive and display video signals.

10. The method according to claim 9, wherein said wireless connection is provided by one of a High speed Circuit Switched Data (HSCSD) connection and General Packet Radio Services (GPRS) connection.

11. A system for monitoring a site from a remote location, comprising:
at the site (101): at least one detector (102) for providing an alarm signal (103), at least one video camera (104) providing a video signal, and a video server (105) arranged to receive the video signal for storage and transmission to at least one remote location,
means (107,110) for providing a wireless link for transmission of video signal between the site (101) and the remote location in response to a alarm signal, and
at the remote location, means for receiving the video signal from the site (101), a display for displaying said video signal to a user, and control means for a user to control transfer of at least a portion of the video signal stored in the video server (105) to the remote location over the wireless link by sending control signals from the display device to the video server (105), the control signals corresponding to selection of at least one video server control function on the display device and said portion of stored video signal having been generated during a time period at least partly covering time prior to said alarm signal.

12. The system in claim 11 in which the means for receiving the video signal from the site (101), the display for displaying said video signal to a user, and the control means for a user to select at least a portion of the video signal to be displayed are comprised in a mobile station (111).

## Patentansprüche

1. Verfahren zum Überwachen eines Ortes (101) von einem entfernten Standort, umfassend:
- Erzeugen (301) eines Videosignals des Ortes (101) durch eine Videokamera (104);
- Speichern (301) des Videosignals in einem Videoserver (105) an dem Ort (101);
- in Reaktion (302) auf ein Alarmsignal, wobei das Alarmsignal auf die Erfassung eines Ereignisses an dem Ort (101) hin erzeugt wird, Aufbauen (303) einer drahtlosen Verbindung zur Übertragung des Videosignals zwischen dem Ort (101) und einer Anzeigevorrichtung (111), die sich an dem entfernten Standort befindet, und während das Videosignal weiterhin gespeichert wird, ebenfalls Übertragen (304) des Videosignals von dem Ort (101) an die Anzeigevorrichtung (111) an dem entfernten Standort über die drahtlose Verbindung;
- Steuern der Übertragung eines weiteren Videosignals von dem Ort (101) an die Anzeigevorrichtung (111) durch Senden von Steuersignalen von der Anzeigevorrichtung an den Videoserver (105); und
- in Reaktion (306) auf die Steuersignale, die von der Anzeigevorrichtung (111) empfangen werden, Übertragen (307) eines Teils des gespeicherten Videosignals an die Anzeigevorrichtung (111) an dem entfernten Standort, wobei der Teil des gespeicherten Videosignals während einer Zeitspanne erzeugt wurde, die zumindest teilweise eine Zeit abdeckt, die vor dem Alarmsignal liegt.

2. Verfahren nach Anspruch 1, wobei die Steuersignale der Auswahl von Funktionen auf der Anzeigevorrichtung (111) entsprechen und in Reaktion auf Benutzereingaben erzeugt werden, die an der Anzeigevorrichtung (111) eingegeben werden.

3. Verfahren nach Anspruch 2, wobei die Funktionen eine oder mehrere der Funktionen STOP, PLAY, FORWARD und REWIND umfassen.

4. Verfahren nach Anspruch 1, wobei die Anzeigevorrichtung (111) eine Zeitleiste anzeigt, die dem Teil des Videosignals entspricht.

5. Verfahren nach Anspruch 4, wobei die Anzeigevorrichtung (111) Steuerungseinrichtungen (201) umfasst, um die Startzeit des auf der Anzeigevorrichtung (111) anzuzeigenden Videos auszuwählen.

6. Verfahren nach irgendeinem der Ansprüche 1 bis 5, wobei das Alarmsignal auf einen Alarm hin erzeugt wird, der durch einen von mehreren verschiedenen Detektoren (102) an dem Ort (101) verursacht wird.

7. Verfahren nach irgendeinem der Ansprüche 1 bis 6, umfassend:
- Einschließen von Daten in dem Videosignal, welche die Zeit des Alarmsignals und die Übereinstimmung zwischen Rahmen des Videosignals und der Zeit des Alarmsignals angeben.

8. Verfahren nach irgendeinem der Ansprüche 1 bis 7, umfassend Komprimieren des Videosignals bei einer separaten Videokomprimierungseinheit, die sich an dem Alarmort befindet, unter Verwendung eines Enkoders ausgewählt aus einer Gruppe umfassend H.261 Enkoder, H.263 Enkoder und MPEG-4 Enkoder.

9. Verfahren nach irgendeinem der Ansprüche 1 bis 8, wobei die drahtlose Verbindung zwischen dem Ort (101) und einer Mobilstation (111) aufgebaut wird, konfiguriert zum Empfangen und Anzeigen von Videosignalen.

10. Verfahren nach Anspruch 9, wobei die drahtlose Verbindung bereitgestellt wird durch eine High Speed Circuit Switched Data (HSCSD) Verbindung oder General Packet Radio Services (GPRS) Verbindung.

11. System zum Überwachen eines Orts von einem entfernten Standort, umfassend:
- an dem Ort (101): mindestens einen Detektor (102) zum Bereitstellen eines Alarmsignals (103), mindestens eine Videokamera (104), die ein Videosignal bereitstellt, und einen Videoserver (105), der eingerichtet ist, das Videosignal zum Speichern und zum Übertragen an mindestens einen entfernten Standort zu empfangen;
- Mittel (107, 110) zum Bereitstellen einer drahtlosen Verbindung zur Übertragung eines Videosignals zwischen dem Ort (101) und dem entfernten Standort, in Reaktion auf ein Alarmsignal; und
- an dem entfernten Standort, Mittel zum Empfangen des Videosignals von dem Ort (101), eine Anzeigevorrichtung, um das Videosignal einem Benutzer anzuzeigen, und Steuermittel für einen Benutzer, um eine Übertragung von mindestens einem Teil des Videosignals, das in dem Videoserver (105) gespeichert ist, über die drahtlose Verbindung an den entfernten Standort zu steuern, indem Steuersignale von der Anzeigevorrichtung an den Videoserver (105) gesendet werden, wobei die Steuersignale der Auswahl von mindestens einer Videoserver-Steuerfunktion auf der Anzeigevorrichtung entsprechen, und wobei der Teil des gespeicherten Videosignals während einer Zeitspanne erzeugt wurde, die zumindest teilweise eine Zeit vor dem Alarmsignal abdeckt.

12. System nach Anspruch 11, in dem die Mittel zum Empfangen des Videosignals von dem Ort (101), die Anzeigevorrichtung, um das Videosignal einem Benutzer anzuzeigen, und die Steuermittel für einen Benutzer, um mindestens einen Teil des anzuzeigenden Videosignals auszuwählen, in einer Mobilstation (111) enthalten sind.

## Revendications

1. Procédé de surveillance d'un site (101) à partir d'un emplacement distant, comportant les étapes consistant à :
générer, (301) au moyen d'une caméra vidéo (104), un signal vidéo du site (101) ;
stocker (301) le signal vidéo dans un serveur vidéo (105) au niveau du site (101) ;
en réponse (302) à un signal d'alarme, ledit signal d'alarme étant généré lors de la détection d'un événement au niveau du site (101), établir (303) une connexion sans fil en vue du transfert d'un signal vidéo entre le site (101) et un dispositif d'affichage (111) localisé à l'emplacement distant, et, tout en poursuivant le stockage du signal vidéo, transférer (304) également le signal vidéo du site (101) au dispositif d'affichage (111) à l'emplacement distant sur ladite connexion sans fil ;
commander le transfert d'un autre signal vidéo, du site (101) au dispositif d'affichage (111), en envoyant des signaux de commande du dispositif d'affichage au serveur vidéo (105) ; et
en réponse (306) aux signaux de commande reçus du dispositif d'affichage (111), transférer (307) une partie du signal vidéo stocké au dispositif d'affichage (111) à l'emplacement distant, où ladite partie du signal vidéo stocké a été générée au cours d'une période de temps couvrant au moins en partie le temps précédent ledit signal d'alarme.

2. Procédé selon la revendication 1, dans lequel les signaux de commande correspondent à la sélection de fonctions sur le dispositif d'affichage (111) et sont générés en réponse à des entrées d'utilisateur saisies sur le dispositif d'affichage (111).

3. Procédé selon la revendication 2, dans lequel les fonctions comportent une ou plusieurs des fonctions ARRÊT, LECTURE, AVANCE et RETOUR.

4. Procédé selon la revendication 1, dans lequel le dispositif d'affichage (111) affiche une ligne temporelle correspondant à ladite partie du signal vidéo.

5. Procédé selon la revendication 4, dans lequel le dispositif d'affichage (111) comporte des commandes (201) en vue de sélectionner l'heure de début d'une vidéo à afficher sur le dispositif d'affichage (111).

6. Procédé selon l'une quelconque des revendications 1 à 5, dans lequel le signal d'alarme est généré suite au déclenchement d'une alarme par l'un d'une pluralité de différents détecteurs (102) au niveau du site (101).

7. Procédé selon l'une quelconque des revendications 1 à 6, comportant les étapes consistant à :
inclure dans ledit signal vidéo, des données indiquant le temps dudit signal d'alarme et la correspondance entre des trames du signal vidéo et le temps dudit signal d'alarme.

8. Procédé selon l'une quelconque des revendications 1 à 7, comportant l'étape consistant à compresser ledit signal vidéo au niveau d'une unité de compression vidéo séparée localisée au site d'alarme au moyen d'un codeur sélectionné dans un groupe comportant le codeur H.261, le codeur H.263 et le codeur MPEG 4.

9. Procédé selon l'une quelconque des revendications 1 à 8, dans lequel ladite connexion sans fil est établie entre le site (101) et une station mobile (111) configurée en vue de recevoir et afficher les signaux vidéo.

10. Procédé selon la revendication 9, dans lequel ladite connexion sans fil est délivrée par une connexion parmi une connexion de service de données à commutation de circuits à haut débit (HSCSD) et une connexion de service général de radiocommunication par paquets (GPRS).

11. Système de surveillance d'un site à partir d'un emplacement distant, comportant :
au niveau du site (101) : au moins un détecteur (102) en vue de fournir un signal d'alarme (103), au moins une caméra vidéo (104) fournissant un signal vidéo, et un serveur vidéo (105) agencé en vue de recevoir le signal vidéo pour le stockage et la transmission à au moins un emplacement distant,
des moyens (107, 110) en vue de fournir une liaison sans fil en vue de la transmission des signaux vidéo entre le site (101) et l'emplacement distant en réponse à un signal d'alarme et
au niveau de l'emplacement distant, des moyens en vue de recevoir le signal vidéo du site (101), un affichage en vue de l'affichage dudit signal vidéo à un utilisateur, et des moyens de commande afin qu'un utilisateur puisse commander un transfert d'au moins une partie du signal vidéo stocké sur le serveur vidéo (105) vers l'emplacement distant sur la liaison sans fil en envoyant des signaux de commande du dispositif d'affichage au serveur vidéo (105), les signaux de commande correspondant à la sélection d'au moins une fonction de commande de serveur vidéo sur le dispositif d'affichage et ladite portion de signal vidéo stocké ayant été générée au cours d'une période de temps couvrant au moins partiellement le temps précédent ledit signal d'alarme.

12. Système selon la revendication 11, dans lequel les moyens de réception du signal vidéo à partir du site (101), l'affichage en vue d'afficher ledit signal vidéo à un utilisateur, et les moyens de commande afin qu'un utilisateur puisse sélectionner au moins une partie du signal vidéo à afficher sont inclus dans une station mobile (111).
